**Europäisches Patentamt**

**European Patent Office**

**Office européen des brevets**

(19)

(11) Veröffentlichungsnummer: **0 175 863**
**B1**

(12) ## EUROPÄISCHE PATENTSCHRIFT

(45) Veröffentlichungstag der Patentschrift: **27.12.90**

(51) Int. Cl.⁵: **H 02 J 13/00**

(21) Anmeldenummer: **85108615.7**

(22) Anmeldetag: **10.07.85**

(54) **Verfahren zum Senden von Daten über die Leitung eines Wechselstrom-Verteilungsnetzes und Sender zur Durchführung des Verfahrens.**

(30) Priorität: **27.08.84 CH 4077/84**
**03.04.85 CH 1445/85**

(43) Veröffentlichungstag der Anmeldung:
**02.04.86 Patentblatt 86/14**

(45) Bekanntmachung des Hinweises auf die
Patenterteilung:
**27.12.90 Patentblatt 90/52**

(84) Benannte Vertragsstaaten:
**AT DE FR GB**

(56) Entgegenhaltungen:
**EP-A- 153 488**
**CH-A- 404 775**
**CH-A- 517 415**
**FR-A-1 533 502**
**FR-A-2 144 209**
**GB-A-2 008 299**
**GB-A-2 116 406**
**US-A-3 702 460**

(73) Patentinhaber: **ZELLWEGER USTER AG**
**Wilstrasse 11**
**CH-8610 Uster (CH)**

(72) Erfinder: **Baer, Hanspeter, Dr.**
**Sonnenbergstrasse 71**
**CH-8610 Uster (CH)**

(74) Vertreter: **Dipl.-Phys.Dr. Manitz Dipl.-Ing., Dipl.-**
**W.-Ing. Finsterwald Dipl.-Ing. Grämkow Dipl.-**
**Chem.Dr. Heyn Dipl.-Phys. Rotermund**
**Morgan, B.Sc.(Phys.) Robert-Koch-Strasse 1**
**D-8000 München 22 (DE)**

**Beschreibung**

Die Erfindung betrifft ein Verfahren zum Senden von Daten über die Leitung eines Wechselstrom-Verteilungsnetzes, bei welchem ein für die zum sendenden Daten repräsentatives Stromsignal erzeugt und in das Netz eingegeben wird, wobei dieses Stromsignal als Laststrom eines Netzwerkes erzeugt wird, welches über einen Schalters 2 mit der durch das Netz gebildeten Spannungsquelle verbindbar ist. Die Erfindung betrifft ferner einen Sender zur Durchführung des Verfahrens gemäß dem Oberbegriff des Patentanspruches 12.

Mit Verfahren der eingangs genannten Art sollen beispielsweise der Zählwerkstand von über das Netz verteilten Zählern oder Informationen über die erfolgte Befehlsausführung von rundsteuerempfängern an eine Zentrale zurückgemeldet werden. Für diese Rückmeldung ist eine Vielzahl von möglichst billigen Sendern mit relativ geringer Leistung erforderlich, während der zentrale Empfänger eher aufwendig sein kann. Das von Empfänger ausgewertete Signal ist entweder direkt das Stromsignal oder ein daraus abgeleitetes Signal, wie beispielsweise der resultierende Spannungsabfall an der Streuinduktivität des das Netz speisenden Transformators.

Bei einem aus der CH—PS 404 775 bekannten Verfahren der eingangs genannten Art wird ein Geberkondensator dem Wechselstromnetz im Takt der einfachen oder doppelten Netzfrequenz zugeschaltet. Ungünstig ist hierbei, daß die Frequenz der erzeugten Schweingungen stets durch die Kapazität des Geberkondensators sowie die an der betreffenden Senderstelle resultierende Induktivität des Netzes vorgegeben ist. Ungünstig bei einem derartigen frequenzselektiven Netzwerk ist, daß die jeweilige Senderfrequenz im allgemeinen nicht ohne weiteres und allenfalls in bestimmten engen Grenzen varriierbar ist.

In der CH—PS 517 415 ist eine Einrichtung zur Informationsübertragung über ein elektrisches Versorgungsnetz beschrieben, bei der ein jeweiliges Informationssignal durch einen betreffenden Sender dadurch erzeugt wird, daß eine Last periodisch mit einer Konstanten Frequenz an das Netz angeschaltet wird, die halb so groß wie die Netzfrequenz ist. Hierbei werden die jeweiligen Stromimpulse jeweils nur während jeder zweiten Halbwelle der Netzspannung erzeugt, wobei die Dauer dieser Stromimpulse im wesentlichen der der Netzhalbwelle entspricht. Es ergibt sich somit eine Stromsignal mit einer Grundwelle konstanter Frequenz. Eine Variation des jeweiligen Sendesignals und insbesondere der Senderfrequenz ist nicht möglich.

In der nachveröffentlichen EP—A1—0 153 488 wird ein Verfahren zum Übertragen von Signalen in einem elektrischen Niederspannungs-Versorgungsnetz vorgeschlagen, bei dem mittels zumindest zweier den Netzleitungen zuschaltbarer Widerstände ein gewünschtes theoretisches Signal durch ein treppenförmiges Stromsignal angenähert wird.

Es sind ferner Verfahren bekannt (vgl. z.B. DE—PS 28 20 213, CH—PS 540 607), bei denen als entweder direkt oder über einen steuerbaren Schalter mit den Netzklemmen verbundenes Netzwerk des Senders ein frequenzselektiver, abgestimmter Schwingkreis verwendet wird, dessen Resonanzfrequenz die Sendefrequenz mitbestimmt. Ferner wird beim aus der CH—PS 540 607 bekannten Verfahren das in einer Leistungsstufe erzeugte Sendesignal über einen Transformator ins Netz eingekoppelt.

Abgesehen davon, daß die für das Stromsignal benötigte Leistung zuerst dem Netz entnommen und diesem dann über einen Umweg wieder zugeführt wird, stellt das frequenzselektive Netzwerk wiederum eine starke Einschränkung dar, indem es im Betrieb eine Änderung der Sendefrequenz erschwert. Schließlich ist der aktive Teil des Senders durch eine Verstärkerstufe gebildet, die durch entsprechende Filter vor hohen Spannungen geschützt werden muß.

Der Erfindung liegt die Aufgabe zugrunde, ein Verfahren sowie einen Sender der eingangs genannten Art zu schaffen, bei denen weder eine Verstärkerstufe noch ein die Sendefrequenz festlegendes, insbesondere auf diese Sendefrequenz abgestimmtes Netzwerk erforderlich ist und die demnach bezüglich der Frequenz des Stromsignals eine hohe Flexibilität aufweisen.

Zur Lösung dieser Aufgabe ist beim erfindungsgemäßen Verfahren vorgesehen, daß zum Senden des Stromsignals das Netzwerk mehrmals pro Periode der Netzspannung kurzzeitig mit der Netzspannungsquelle verbunden und dadurch eine Reihe von Stromimpulsen erzeugt wird, und daß die Zeitpunkte der Erzeugung und/oder die Dauer dieser Stromimpulse mittels einer Rechnersteuerung so gewählt werden, daß das resultierende, durch die Stromimpulse gebildete ausgesandte Stromsignal wenigstens angenähert einem die zu sendenden Daten repräsentierenden gewünschten theoretischen Signal entspricht.

Aufgrund dieser Ausbildung wird mit einfachsten Mitteln im Hinblick auf die zu übermittelnden Daten bzw. Informationen und insbesondere im Hinblick auf die Frequenz des zu übermittelnden Signals eine hohe Variabilität erzielt. Erfindungsgemäß läßt sich durch eine entsprechende Wahl des Zeitpunkts der Erzeugung der Stromimpulse und/oder deren Dauer ein Stromsignal erzeugen, dessen zeitlicher Mittelwert, ermittelt über ein Intervall, welches sich über ein Mehrfaches der Dauer eines Einzelimpulses erstreckt, jedoch kürzer als die Periode eines gegebenenfalls verwendeten trägerfrequenten Signals ist, praktisch mit dem im gleichen Intervall gemessenen Mittelwert des gewünschten theoretischen Signals übereinstimmt. Da die Spannungsquelle durch das Netz gebildet ist, ergibt sich eine sinusförmige Speisespannung mit bespielsweise einer Amplitude von 220 V RMS bei einem Anschluß des Netzwerks zwischen Phase und Nulleiter bzw. 380 V RMS beim Anschluß zwischen zwischen zwei Phasen sowie einer Frequenz von 50 Hz.

Das gewünschte theoretische Signal, dem das zu sendende Stromsignal praktisch entspricht, kann beispielsweise ein amplituden-, frequenz- oder phasenmoduliertes Signal einer bestimmten Trägerfrequenz sein. Es ist sowohl die Übertragung innerhalb einer bestimmten Spannungsebene (Niederspannung oder Mittelspannung) als auch zwischen der Niederspannungs- und der Mittelspannungsebene denkbar.

Ist die Spannungsquelle durch das Netz gebildet, so ist im Sender in der Regel ein gewisser Aufwand zur Kompensation der Amplituden- und Vorzeichenänderung der Netzspannung erforderlich. Dies bedingt im Sender insbesondere die Kenntnis der aktuellen Phasenlage der Netzspannung. Ist gemäß einer bevorzugten Weiterbildung des erfindungsgemäßen Verfahrens vorgesehen, daß bei der Festlegung eines den Schalter steuernden Steuersignals der Rechnersteuerung von der theoretischen Annahme ausgegangen wird, daß anstelle der tatsächlichen Netzspannungsquelle eine Gleichspannungsquelle vorliegt und dieses Steuersignal so gewählt wird, daß das durch die Aneinanderreihung der Stromimpulse gebildete Stromsignal bei der Frequenz des die zu sendenden Daten repräsentierenden gewünschten theoretischen Signals einen möglichst hohen spektralen Anteil aufweist, so ist eine solche Kompensation der Amplituden- und Vorzeichenänderung der Netzspannung entbehrlich, so daß auch die Kenntnis der aktuellen Phasenlage der Netzspannung entfallen kann. Wird das den Schalter beaufschlagende Steuersignal ausgehend von diesen Kriterien festgelegt und anschließend das resultierende ausgesandte Stromsignal mit der sich sinusförmig ändernden Netzspannung der Frequenz F analysiert, so erkennt man, daß die Netzspannung zu einer Amplitudenmodulation des ursprünglichen, theoretisch von einer Gleichspannung abgeleiteten Strom- bzw. Sendesignals führt. Ist die Frequenz des gewünschten theoretischen Signals gleich f, so verschwindet zwar die Signalkomponente bei f, diese wird jedoch durch zwei Komponenten bei $f + F$ und $f - F$ ersetzt, welche den aus der Modulationstheorie bekannten Seitenbändern bei der Amplitudenmodulation entsprechen und im Empfänger durch geeignete Demodulationsverfahren ausgewertet werden können.

Der erfindungsgemäße Sender zur Durchführung des Verfahrens zeichnet sich dadurch aus, daß eine einen Rechner umfassende, eine Steuersignal für den Schalter liefernde Steuerung vorgesehen ist, um durch eine entsprechende Ansteuerung des Schalters zum Senden des Stromsignals das Netzwerk mehrmals pro Periode der Netzspannung kurzzeitig mit der Netsspannungsquelle zu verbinden und dadurch eine Reihe von Stromimpulsen zu erzeugen, wobei mittels der Steuerung die Zeitpunkte der Erzeugung und/oder die Dauer dieser Stromimpulse derart bestimmbar sind, daß das resultierende, durch die Stromimpulse gebildete ausgesandte Stromsignal wenigstens angenähert einem die zu sendenden Daten repräsentierenden, über eine Eingabe der Steuerung vorgebbaren gewünschten theoretischen Signal entspricht und der Steuerung bzw. dem Rechner außer den Kenngrößen des gewünschten theoretischen Signals auch die Kenngrößen der Netzspannung eingebbar sind.

Gemäß einer ersten Ausführungsvariante des erfindungsgemäßen Senders sind die Kenngrößen dem Rechner in Form von Amplituden- und Phasenwerten eingebbar.

Gemäß einer weiteren Ausführungsform sind diese Kenngrößen dem Rechner im form von Amplitudenwerten der Netzspannung und des gewünschten theoretischen Signals eingebbar.

In diesem Falle müssen die Phasenwerte der Netzspannung nicht berücksichtigt werden. Ferner ist der Aufbau des Senders dadurch vereinfacht, daß eine Synchronisationsschaltung für die Synchronisierung der Schaltzeitpunkte des Schalters mit der aktuellen Phase der Netzspannung entfällt.

Weitere vorteilhafte Ausführungsvarianten der Erfindung sind in den Unteransprüchen angegeben.

Nachstehend wird die Erfindung anhand von Ausführungsbeispielen und der Zeichnungen näher erläutert; dabei zeigen:

Fig. 1 ein Prinzipschaltbild zur Funktionserläuterung,

Fig. 2 ein erstes Diagramm der Signalverläufe,

Fig. 3, 4 je ein Blockschaltbild eines ersten Senders,

Fig. 5a, 5b je ein zweites Diagramm der Signalverläufe, und

Fig. 6, 7 je ein Blockschaltbild eines zweiten Senders.

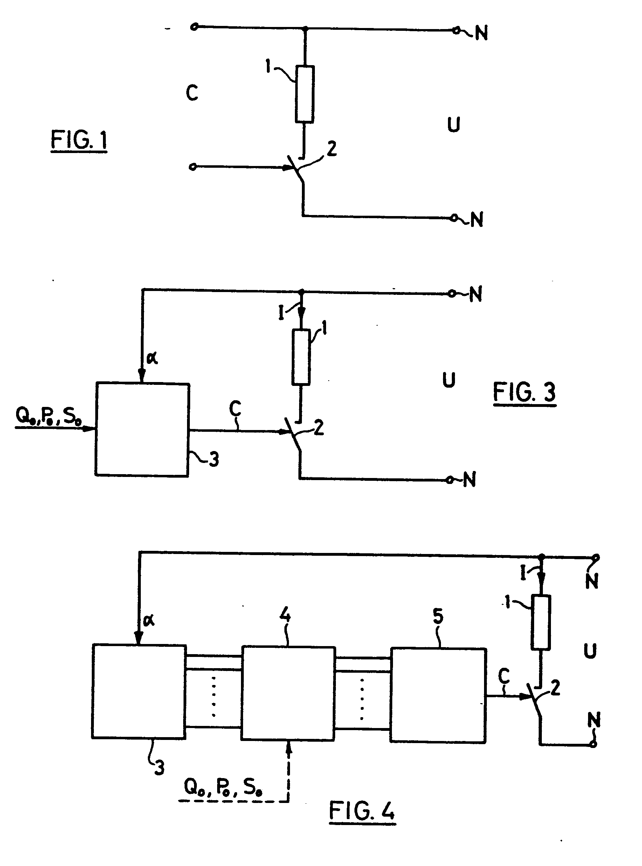

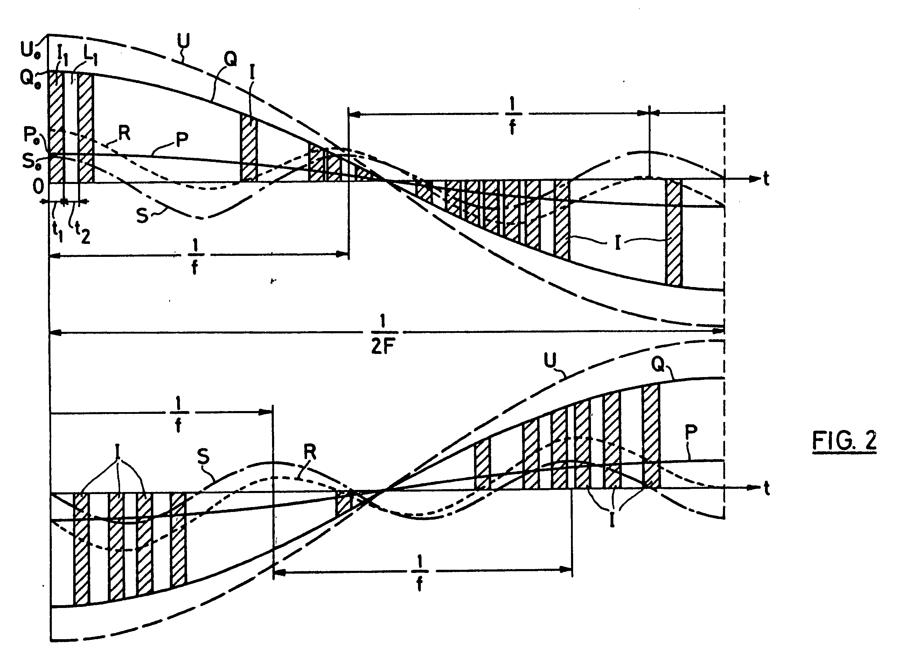

Das in Fig. 1 dargestellt Prinzipschaltbild zeigt einen Widerstand 1, welcher als einfachste Ausführungsform eines als Last geschalteten Netzwerkes aufgefasst werden kann, und einen gesteuerten Schalter 2, die mit den Netzklemmen N verbunden sind. Der Schalter 2 wird durch ein Steuersignal C geschaltet.

Ist der Schalter 2 geschlossen, dann fliesst ein durch die Netzspannung U und den Widerstand 1 gegebener Strom. Bei geöffnetem Schalter 2 fliesst kein Strom. Wenn man nun die Oeffnungs- und Schliesszeiten des Schalters 2 variiert und das aus den erzeugten Stromimpulsen I (vgl. z.B. fig. 2) resultierende Stromsignal im Netz betrachtet, dann variiert auch dieses Stromsignal mit der Zeit. Insbesondere variiert auch der über eine bestimmte Messperiode erfasste Mittelwert dieses resultierenden Stromsignals in Abhängigkeit von den Oeffnungs- und Schliesszeiten des Schalters 2.

Die Kombination von Widerstand 1 und dem in rascher Folge geöffneten und wieder geschlossenen Schalter 2 kann also als variabler Widerstand aufgefasst werden, solange nur der mittlere Widerstandswert über eine Messperiode erfasst wird, welche deutlich länger ist als die typische Schaltperiode des Schalters 2. Dieser Umstand wird beim erfindungsgemässen Sendeverfahren ausgenützt, wobei als Quellenspannung vorzugsweise die normale Netzspannung U von 220 V RMS beziehungsweise 380 V RMS und 50 Hz verwendet wird.

Fig. 2 zeigt in einem Diagramm den Verlauf der verschiedenen Signale, und zwar in jeder der beiden Zeilen für eine halbe Periode $\frac{1}{2}F$ der durch die Netzspannung U gebildeten Quellenspannung. Auf der Abszisse ist die Zeit t eingetragen, während auf der Ordinate die Momentanwerte der dargestellten Spannungs- und Stromsignale eingetragen ist.

Ein sinusförmiges Stromsignal Q ergibt sich dann, wenn der Widerstand 1 über den Schalter 2 dauernd mit der sinusförmigen Netzspannung U verbunden ist. Durch das Steuersignal C (Fig. 1) wird der Schalter 2 kurzzeitig geschlossen und geöffnet. Dadurch entsteht entsprechend den Schaltzeiten des Schalters 2 eine Folge von Stromimpulsen I.

Die Schliesszeiten des Schalters 2 für einen einzelnen Stromimpuls I sind beim Ausführungsbeispiel gemäß Fig. 1. konstant gewählt, die während Oeffnungszeiten variabel sind. Durch eine ununterbrochene Aneinanderreihung von Einzelimpulsen I konstanter Dauer können auch längere Impulse entstehen, deren Dauer ein Mehrfaches der Dauer eines einzelnen Strom impulses I beträgt.

Von einem gewünschten trägerfrequenten Signal S mit dem Amplitudenwert $S_o$, welches ein Strom-Sendesignal ist, wird ein gewünschtes theoretisches Signal R abgeleitet. In der Darstellung von Fig. 2 ist das trägerfrequente Signal S sinusförmig, wobei dessen Amplitude und/oder Phase und/oder Frequenz in der Praxis zur Datenübertragung zusätzlich moduliert werden. Diese Modulation ist in der Figur der besseren Uebersichtlichkeit halber vernachlässigt. Die Frequenz f des trägerfrequenten Signals S beträgt darstellungsgemäss etwa das Vierfache der Frequenz F der Quellen-bzw. Netz spannung U und liegt in der Praxis etwa zwischen 100 Hz und 2500 Hz. Aus Gründen, die später noch erläutert werden, überlagert man dem trägerfrequenten Signal S noch einen Signalanteil P, welcher zum Stromsignal Q proportional ist. Daraus resultiert dann als Stromsignal das gewünschte theoretische Signal R.

Beim erfindungsgemässen Sendeverfahren erzeugt der Sender durch das Oeffnen und Schliessen des Schalters 2 eine Folge von Stromimpulsen I, wobei diese Stromimpulsfolge möglichst gut mit dem gewünschten theoretischen Signal R übereinstimmen soll. Im folgenden wird die Art und Weise der Annäherung des gewünschten theoretischen Signals R durch ein Impulssignal näher erläutert.

Wenn man einen ersten Stromimpuls $I_1$ der Dauer $t_1$ in der ersten Zeile von Fig. 2 sowie eine auf diesen Impuls folgende Lücke $L_1$ der Dauer $t_2$ betrachtet, dann sieht man, dass der im Intervall $t_1+t_2$ resultierende Mittelwert des Stromes gleich gross ist wie der Mittelwert des gewünschten theoretischen Signals R im gleichen Intervall $t_1+t_2$. Aus dem Gesagten ergibt sich, dass sich durch eine geeignete Wahl des Zeitpunkts der Erzeugung der Stromimpulse I und/oder deren Dauer ein Signal erzeugen lässt, dessen zeitlicher Mittelwert, ermittelt über ein Intervall, welches ein Mehrfaches der Dauer eines einzelnen Stromimpulses I beträgt, jedoch kürzer ist als die Periode des trägerfrequenten Signals S, praktisch mit dem Mittelwert des gewünschten theoretischen Signals R übereinstimmt.

Da man die Stromimpulse I sinnvollerweise nur dann absetzen kann, wenn die Momentanwerte der Signale Q und R das gleiche Vorzeichen aufweisen, was im Mittel nur in 50% aller Fälle gewährleistet ist, wird dem trägerfrequenten Signal S noch der schon erwähnte, einen 50 Hz-Anteil bildende Signalanteil P mit dem Amplitudenwert $P_o$ überlagert, so dass der genannte Prozentsatz auf über 50% erhöht wird.

Bei der praktischen Ausgestaltung eines Senders für das beschriebene Sendeverfahren muss der Schalter 2 (Fig. 1) entsprechend angesteuert werden. Dies erfolgt gemäss den Fig. 3 und 4 durch einen geeigneten Rechner 3 als Steuerung, welcher das Steuersignal C für den Schalter 2 liefert.

Der Rechner 2 weist, zwei Eingänge auf, einen für die Eingabe der Amplitudenwerte $Q_o$ (Stromsignal Q), $S_o$ (trägerfrequentes Signal S) und $P_o$ (überlagerter 50 Hz-Signalanteil P), und einen für die Eingabe eines Phasenwertes $\alpha$, welcher Informationen über die Phase der Netzspannung U enthält. Der Rechner 3 ermittelt anhand geeigneter Kriterien die optimale Impulsfolge und steuert den Schalter 2 entsprechend an. Die Schaltzeitpunkte sind von der alktuellen Phase der sinusförmigen Netzspannung U abhängig, da diese Phase die Amplitude des resultierenden Stromimpulses mitbestimmt. Aus diesem Grund muss dem Rechner 3 periodisch Information über den aktuellen Phasenwert $\alpha$, d.h. den wert der Phase des Signals bzw. der Netzspannung U zugeführt werden. Dies geschieht vorzugsweise mit einem Nulldurchgangsdetektor, an dessen Eingang die Netzspannung U gelegt wird. Damit erkennt der Rechner 3 periodisch die Zeitpunkte, an denen die Phase der Netzspannung einen definierten Wert annimmt. Bei bekannter Dauer der Periode $\frac{1}{F}$ der Netzspannung U kann der Rechner 3 damit auch die Zwischenwert der Phase der Netzspannung U berechnen.

Für die Festlegung der Kriterien zur Ermittlung der optimalen Impulsfolge durch den Rechner 3 sind viele Varianten möglich. Nur beispielsweise seien folgende angegeben:

—Das Integral über den aktuellen einen Sendeimpuls bildenden Stromimpuls I (Fig. 2) ist gleich der Fläche des gewünschten Sendesignals R inklusive dem überlagerten 50 Hz-Signalanteil, vom Anfang des aktuellen bis zum Anfang des nächsten zu sendenden Stromimpulses; oder

—man vergleicht den Wert der Integrale vom Impulssignal und gewünschtem theoretischen Signal R (Fig. 2) über einen bestimmten kurzen Abschnitt des Sendesignals von beispielsweise einem Sechzehntel der Period $\frac{1}{F}$. Man wählt die

Anzahl der Impulse und deren Position — bei konstanter Impulsdauer — innerhalb des Abschnitts derart, dass der quadratische Fehler der Abweichung der Integrale minimal wird. Der quadratische Fehler kann dabei auf verschiedene Arten definiert und es können insbesondere auch die quadratischen Fehler von Unterabschnitten analysiert und für den Entscheid über Anzahl und Position der zu sendenden Stromimpulse I berücksichtigt werden; oder

— Auswahl desjenigen Impulssignals, welches ein möglichst gute Korrelation mit dem entsprechenden Abschnitt des gewünschten Sendesignals R aufweist.

Beim Ausführungsbeispiel von Fig. 4 umfaßt die dem Schalter 2 zugeordnete Steuerung 3, 4, 5 außer dem Rechner 3 zwischen diesem und dem Schalter 2 einen programmierbaren, einen Lese-Speicher (PROM) bidenden Speicher 4 und ein Interface 5, welches auch Teil des Rechners 3 sein kann. Bei diesem Ausführungsbeispiel werden die Zeitpunkte der Aussendung der Stromimpulse I (Fig. 2) nicht online berechnet, sondern für sämtliche Kombinationen der möglichen Phasenwerte der Signale U und S sowie für eine bestimmte Wahl der Amplitudenwerte $P_o, Q_o, S_o$ vorausberechnet und im Speicher 4 gespeichert. Der Rechner 3 ermittelt vorzugsweise die aktuellen Phasenwerte des trägerfrequenten Signals S und der Netzspannung U und bestimmt dann die durch diese beiden Werte im Speicher 4 gebildete Adresse. Unter dieser Adresse findet dann der Rechner 3 oder das Interface 5 im speicher 4 die Information über den Weiteren Verlauf der Impulsfolge. Durch die Verwendung von Speicher 4 und/oder Interface 5 wird der Rechner 3 entlastet.

Bei einer Realisierung des Senders in Mikroprozessortechnik werden die Signale, insbesondere die berechneten Phasenwerte der Signale S und U, wie auch die Sendezeiten der Stromimpulse I, vorzugsweise quantisiert. Dazu unterteilt man den Bereich zwischen 0 und $2\pi$ der Phasen des trägerfrequentem Signals S und der Netzspannung in beispielsweise je 128 Schritte und ermittelt mit dem Rechner 3 durch einen Zählvorgang mit äquidistanten, gleich grossen Inkrementen die aktuellen Phasenwerte des trägerfrequenten Signals S und der Netzspannung U. Diese werte sind gerade die Adressen für den Speicher 4, der seinerseits als Ausgang beispielsweise die Sequenz für die Aussendung der Stromimpulse I (Fig. 2) für einen bestimmten Zeitabschnitt enthält, während welchem beispielsweise bis zu 8 Impulse auftreten können.

Der Speicher 4 könnte beispielsweise zu einem bestimmten Zeitpunkt die Sequenz "01101000" liefern. Das Interface 5, welches diese Sequenz übernimmt, wird diese beispielsweise folgendermassen interpretieren: In den Zeitintervallen 1, 4, 6, 7, 8, welche je $1/128$ der Periode des träger frequenten Signals S dauern, ist der Schalter 2 offen zu halten (diese Information ist charakterisiert durch eine "0" in der Sequenz), wogegen er in den Intervallen 2, 3 und 5 ("1" in der Sequenz) zu schliessen ist. Nach Ablauf der insgesamt 8 Intervalle wird dem Speicher 4 eine neue Sequenz entnommen, wobei die dann gültigen Phasenwerte der Netzspannung U und des trägerfrequenten Signals S die Adresse der neuen Sequenz bilden. Die Elemente für die Berechnung der Phasenwerte können durch einfache Binärzähler realisiert werden.

Das Interface 5 kann beispielsweise durch ein Schieberegister gebildet sein, in welches vom Speicher 4 die Sequenz der Impulse und Lücken für die 8 Unterschritte simultan eingelesen und anschliessend sequentiell als Steuersignal C an den Schalter 2 abgegeben wird. Der Schalter 2 ist vorzugsweise durch einen Leistungstransistor gebildet.

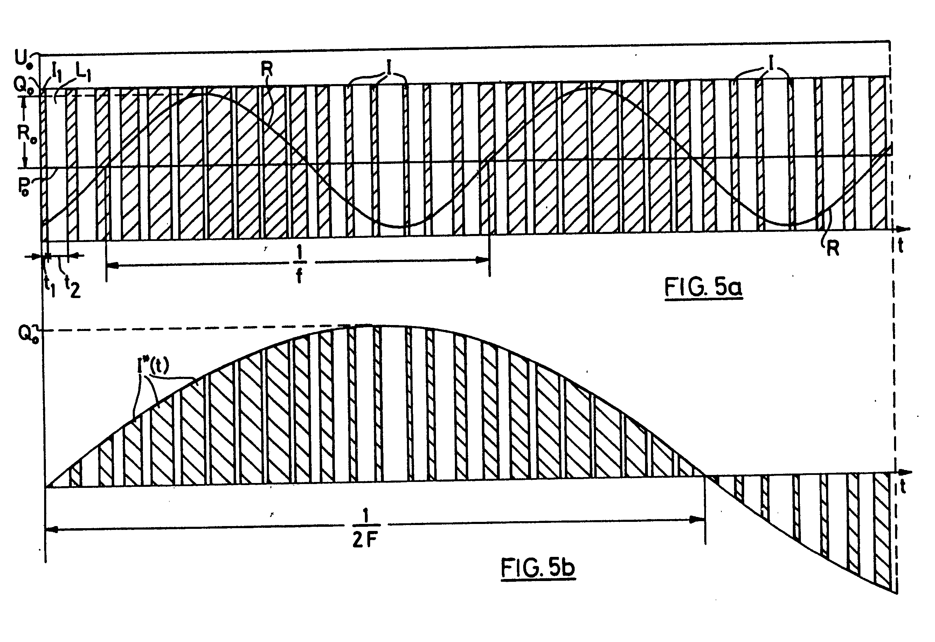

Der Speicher 4 kann als Ausgangswert auch die Dauer des nächsten Impulses und der darauffolgenden Lücke abgeben (vgl. z.B. Fig. 5a, 5b), wobei der Rechner 3 am Ende dieser Lücke mit den dann gültigen Phasenwerten des trägerfrequenten Signals und der Netzspannung U die Dauer des nächsten Impulses und der zugehörigen Lücke erfragt. In diesem Fall ist das Interface 5 durch einen Zeitzähler gebildet.

Fig. 5a zeigt in einem Diagramm den Verlauf der verschiedenen Signale bei einer Schaltung gemäss Fig. 1, aber im Unterschied zum Diagramm von Fig. 2 unter der Annahme, dass das Netz eine Gleichspannung vom Wert $U_o$ liefert. Auf der Abszisse ist die Zeit t eingetragen, während auf der Ordinate die Momentanwerte der dargestellten Stromsignale angegeben sind. Der Wert $Q_o$ für einen Gleichstrom ergibt sich, wenn der Widerstand 1 über den Schalter 2 dauernd mit der Gleichspannung vom Wert $U_o$ verbunden ist. Durch das Steuersignal C (Fig. 1) wird der Schalter 2 kurzzeitig geschlossen und geöffnet. Dadurch entsteht entsprechend den Schaltzeiten des Schalters 2 eine Folge von Stromimpulsen I.

Wahrend die Schliesszeiten des Schalters 2 für einen Einzelimpuls auch in diesem Falle konstant gewählt sein Können, ist beim in Fig. 5a bzw. 5b dargestellten Ausführungsbeispiel vorgesehen, das gewünschte theoretische Signal R in der weiter unten beschriebenen Weise durch eine entsprechende Wahl der Dauer der jeweiligen Stromimpulse I zumindest angenähert nachzubilden.

Das zu sendende gewünschte trägerfrequente Signal S ist durch ein Stromsignal mit dem Amplitudenwert $R_o$ gebildet, welches zusätzlich noch einen Gleichstromanteil mit dem Wert $P_o$ aufweist, auf den später eingegangen wird. Darstellungsgemäss ist das trägerfrequente bzw. von einem trägerfrequenten Signal abgeleitete gewünschte theoretische Signal R sinusförmig, wobei seine Amplitude und/oder Phase und/oder Frequenz in der Praxis zu Datenübertragung zusätzlich moduliert werden. Diese Modulation ist in der Figur der besseren Uebersichtlichkeit halber vernachlässigt. Die Frequenz f des trägerfrequenten theoretischen Signals R liegt in der Praxis zwischen etwa 100 Hz und 2500 Hz.

Wenn man in Fig. 5a den ersten Stromimpuls $I_1$

der Dauer $t_1$ sowie die auf diesen Impuls folgende Lücke $L_1$ der Dauer $t_2$ betrachtet, dann sieht man, dass der im Intervall $t_1+t_2$ resultierende Mittelwert des Stromes gleich gross ist wie der mittelwert des gewünschten theoretischen Signals R im gleichen Intervall. Aus dem Gesagten ergibt sich, dass sich durch geeignete Wahl des Zeitpunkts der Erzeugung der Stromimpulse I und/oder von deren Dauer (vgl. Fig. 5a bzw. 5b) ein Signal erzeugen lässt, dessen zeitlicher Mittelwert, ermittelt über ein Intervall, welches ein Mehrfaches der Dauer eines Einzelimpulses beträgt, jedoch kürzer ist als die Periode des trägerfrequenten Signals, praktisch mit dem Mittelwert des gewünschten theoretischen Signals R übereinstimmt.

Mit dem mehrmaligen Oeffnen und Schliessen des Schalters 2 (Fig. 1) pro Periode $\frac{1}{f}$ des Signals R erreicht man eine günstige Form des Spektrums des durch die Stromimpulse I gebildeten eine Reduktion der Harmonischen bei den Frequenzen 3f, 5f, 7f, usw. Da man die Stromimpulse I sinnvollerweise nur dann absetzen kann, wenn das Vorzeichen des gewünschten theoretischen Signals R positiv ist, was bei fehlendem Gleichstromanteil im Mittel nur in 50% aller Fälle gewährleistet wäre, wird dem trägerfrequenten Signal noch der schon erwähnte Gleichstromanteil mit dem wert $P_o$ überlagert, so dass der genannte Prozentsatz auf über 50%, darstellungsgemäss auf 100%, erhöht wird.

Das durch die Stromimpulse I gebildete Stromsignal sei nachfolgend als I(t) bezeichnet. Es kann folgendermassen dargestellt werden:

$$I(t) = C(t) . \frac{U_o}{W}$$

Dabei ist C(t) bei geschlossenem Schalter 2 (Fig. 1) gleich 1 und bei offenem Schalter 2 gleich 0; $U_o$ ist der Amplitudenwert der Netzgleichspannung und W ist der Wert des als Last angenommenen Widerstandes 1.

Wenn man nun die zu Beginn gewählte vereinfachende Annahme, dass die Netzspannung eine Gleichspannung mit den Wert $U_o$ sei, fallen lässt und das bei einer sich sinusförmig ändernden Netzspannung der beispielsweisen Frequenz F von 50 Hz resultierende Stromsignal I*(t) — siehe Fig. 5b — analysiert, ergibt sich folgende Darstellung:

$$I^*(t) = U_o.sin(2\pi.F.t). \frac{C(t)}{W} = I(t).sin(2\pi.F.t)$$

Dabei ist $U_o$ der Amplitudenwert der Netzspannung; F die Netzfrequenz, beispielsweise 50 Hz; C(t) das unter Annahme einer den Wert $U_o$ aufweisenden Netz-Gleichspannung (Fig. 5a) optimierte Steuersignal für den Schalter 2 und W der Wert des als Last angenommenen Widerstands 1 (Fig. 1).

Ein Vergleich der beiden Beziehungen für I(t) und I*(t) zeigt, dass die sich sinusförmig ändernde Netzspannung zu einer Amplitudenmodulation des ursprünglichen Stromsignals I(t) führt. Damit lässt sich das Spektrum von I*(t) sehr einfach aus demjenigen von I(t) ableiten. Die Signalkomponente bei f wird zwar vollständig verschwinden, sie wird jedoch durch zwei Komponenten bei f+F und f−F ersetzt. Diese beiden Signale entsprechen den aus der Modulationstheorie wohlbekannten Seitenbändern bei der Amplitudenmodulation.

Die gleiche Aufteilung in zwei spektrale Komponenten mit dem Abstand 2F erfolgt auch für jede einzelne Harmonische des Stromsignals I*(t). Die grundsätzlich günstigen eigenschaften des Spektrums von I(t) bleiben aber erhalten, nur dass man bei I*(t) zwei gleich starke Netzsignale bei f+F und f−F vorfindet. Diese beiden Hauptkomponenten können vom Empfänger durch geeignete Demodulationsverfahren ausgewertet werden.

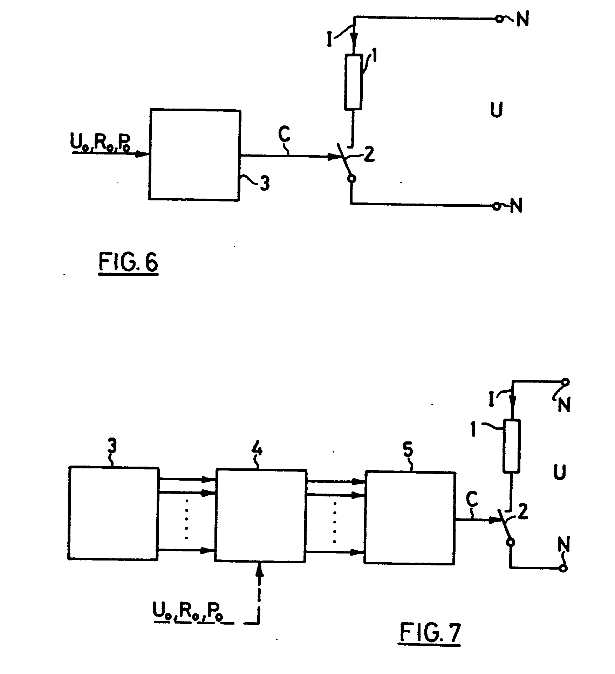

Das Steuersignal C für den Schalter 2 wird so wie bei dem anhand der Fig. 2 bis 4 beschriebenen Ausführungsbeispiel gemäss den Fig. 6 und 7 durch einen Rechner 3 geliefert. Dieser unterscheidet sich vom Rechner 3 der Fig. 3 und 4 im wesentlichen dadurch, dass er keine Informationen über die Phase der Netzspannung und dementsprechend weder einen Eingang für derartige Informationen noch eine Synchronisierschaltung für die Synchronisierung der Schaltzeitpunkte des Schalters 2 mit der aktuellen Phase der Netzspannung benötigt.

Darstellungsgemäss weist der Rechner 3 einen Eingang für die Eingabe der Amplitudenwerte $U_o$ (Netzspannung), $R_o$ (Signal R) und $P_o$ (überlagerter Gleichstromanteil) auf. Der Rechner 3 ermittelt anhand von geeigneten, bei der Beschreibung der Fig. 3 und 4 bereits beispielsweise aufgezählten, Kriterien die optimale Folge der Stromimpulse I und steuert den Schalter 2 mit einem entsprechenden Steuersignal C(t) an.

Beim Ausführungsbeispiel von Fig. 7 ist zwischen dem Rechner 3 und dem Schalter 2 ein als programmierbarer Lese-Speicher (PROM) ausgebildeter Speicher 4 und ein Interface 5 angeordnet, wobei letzteres auch Teil des Rechners 3 sein kann wobei Rechner 3, Speicher 4 und Interface 5 die Steuerung für den Schalter bilden. Bei diesem Ausführungsbeispiel werden die Zeitpunkte der Aussendung der Stromimpulse I (Fig. 5a) nicht online berechnet, sondern für eine Periode von R als Funktion der Phase von R vorausberechnet und im Speicher 4 gespeichert. Der Rechner 3 ermittelt vorzugsweise den aktuellen Phasenwert und bestimmt dann die durch diesen Wert gebildete Adresse. Unter dieser Adresse findet dann der Rechner 3 oder das Interface 5 die Information über den weiteren Verlauf der Impulsfolge. Durch den Speicher 4 und/oder das Interface 5 wird der Rechner 3 entlastet.

Bei einer Realisierung des Senders im Mikroprozessortechnik werden die Signale, insbesondere die Sendezeiten der Stromimpulse I vorzugsweise quantisiert. Dazu unterteilt man den bereich zwischen 0 und 2π der Phase des trägerfrequenten Signals in beispielsweise 128 Schritte und ermittelt mit dem Rechner 3 durch einen Zählvorgang mit äquidistanten, gleich grossen Inkrementen den aktuellen Phasenwert des trägerfrequenten theoretischen Signals R. Dieser Wert ist gerade die Adresse für den Speicher 4, der seinerseits als Ausgang beispielsweise die Sequenz für die Aussendung der Stromimpulse I (Fig. 5a) für einen bestimmten Zeitabschnitt enthält, während welchem beispielsweise bis zu 8 Impulse auftreten können.

Der Speicher 4 könnte beispielsweise zu einem bestimmten Zeitpunkt die Sequenz "01101000" liefern. Das Interface 5, welches diese Sequenz übernimmt, wird diese beispielsweise folgendermassen interpretieren: In den Zeitintervallen 1, 4, 6, 7 und 8, welche je $1/128$ der Periode des Signals R dauern, ist der Schalter 2 offen zu halten (diese Information ist charakterisiert durch eine "0" in der Sequenz), wogegen er in den Intervallen 2, 3 und 5 ("1" in der Sequenz) zu schliessen ist. Nach Ablauf der insgesant 8 Intervalle wird dem Speicher 4 eine neue Sequenz entnommen, wobei der dann gültige Phasenwert des trägerfrequenten Signals R die Adresse der neuen Sequenz bildet. Das Interface 5 kann in diesem Fall durch ein Schieberegister gebildet sein.

Der Speicher 4 kann als Ausgangswert auch die Dauer des nächsten Stromimpulses und der darauffolgenden Lücke abgeben, wobei der Rechner 3 am Ende dieser Lücke mit dem dann gültigen Amplitudenwert die Dauer des nächsten Impulses und der zugehörigen Lücke erfragt. In diesem Fall ist das Interface durch einen Zeitzähler gebildet.

Das beschriebene Verfahren und der Sender eignen sich insbesondere für die Rückmeldung von Daten über beispielsweise den Zählwerkstand von über das Netz verteilten Zählern oder über die erfolgte Befehlsausführung von Rundsteuerempfängern an eine Zentrale.

**Patentansprüche**

1. Verfahren zum Senden von Daten über die Leitung eines Wechselstrom-Verteilungsnetzes, bei welchem ein für die zu sendenden Daten repräsentatives Stromsignal erzeugt und in das Netz eingegeben wird, wobei dieses Stromsignal als Laststrom eines Netzwerkes erzeugt wird, welches über einen Schalters (2) mit der durch das Netz gebildeten Spannungsquelle verbindbar ist, dadurch gekennzeichnet, daß zum Senden des Stromsignals das Netzwerk mehrmals pro Periode (1/F) der Netzspannung U kurzzeitig mit der Netzspannungsquelle verbunden und dadurch eine Reihe von Stromimpulsen I erzeugt wird, und daß die Zeitpunkte der Erzeugung und/oder die Dauer dieser Stromimpulse I mittels einer Rechnersteuerung so gewählt werden, daß das resultierende, durch die Stromimpulse I gebildete ausgesandte Stromsignal wenigstens angenähert einem die zu sendenden Daten repräsentierenden gewünschten theoretischen Signal (R) entspricht.

2. Verfahren nach Anspruch 1, dadurch gekennzeichnet, daß Stromimpulse I konstanter Dauer erzeugt werden.

3. Verfahren nach Anspruch 2, dadurch gekennzeichnet, daß die Dauer ($t_1$) der Stromimpulse I so gewählt wird, daß pro Periode (1/F) der Netzspannung U eine Vielzahl von Stromimpulsen, vorzugsweise mehr als 50, erzeugt werden kann.

4. Verfahren nach Anspruch 3, dadurch gekennzeichnet, daß das die zu sendenden Daten repräsentierende gewünschte theoretische Signal (R) von einem trägerfrequenten Signal (S) abgeleitet wird, dessen Periode (1/f) man kleiner wählt als die Periode (1/F) der Netzspannung (U).

5. Verfahren nach Anspruch 4, dadurch gekennzeichnet, daß bei einere Netzspannung (U) mit einer Frequenz (F) von 50 Hz für das trägerfrequente Signal (S) eine Frequenz (f) von etwa 100 bis 2500 Hz gewählt wird.

6. Verfahren nach Anspruch 4 oder 5, dadurch gekennzeichnet, daß dem trägerfrequenten Signal (S) ein Signalanteil (P) mit der Frequenz (F) der Netzspannung überlagert wird.

7. Verfahren nach Anspruch 1, dadurch gekennzeichnet, daß bei der Festlegung eines den Schalter (2) steuernden Steuersignals (C) der Rechnersteuerung von der theoretischen Annahme ausgegangen wird, daß anstelle der tatsächlichen Netzspannungsquelle eine Gleichspannungsquelle vorliegt und dieses Steuersignal so gewählt wird, daß das durch die Aneinanderreihung der Stromimpulse (I) gebildete Stromsignal bei der Frequenz (f) des die zu sendenden Daten repräsentierenden gewünschten theoretischen Signals (R) einen möglichst hohen spektralen Anteil aufweist.

8. Verfahren nach Anspruch 7, dadurch gekennzeichnet, daß bei der theoretisch angenommenen Gleichspannung von einem Spannungswert ausgegangen wird, der gleich dem Amplitudenwert ($U_o$) der tatsächlichen, eine Wechselspannung bildenden Netzspannung (U) ist.

9. Verfahren nach Anspruch 8, dadurch gekennzeichnet, daß pro Periode (1/f) des gewünschten theoretischen Signals (R) mehrere, vorzugsweise etwa 64 Stromimpulse (I) erzeugt werden.

10. Verfahren nach Anspruch 8, dadurch gekennzeichnet, daß das gewünschte theoretische Signal (R) einen zusätzlichen Gleichstromanteil aufweist.

11. Verfahren nach einem der Ansprüche 8 bis 10, dadurch gekennzeichnet, daß nach der Festlegung des Steuersignals (C) aufgrund der theoretischen Annahme einer eine Netz-Gleichspannung liefernden Spannungsquelle im Betrieb die eine Wechselspannung liefernde tatsächliche Netzspannungsquelle verwendet und somit das durch die Stromimpulse (I) gebildete Stromsignal amplitudenmoduliert wird, wodurch anstelle der Signalkomponente bei der Frequenz (f) des gewünschten theoretischen Signals (R) zwei Komponenten mit den Frequenzen f + F und f − F entstehen, wobei (F) die Frequenz der Netzspannung (U) ist.

12. Sender zur Durchführung des Verfahrens nach Anspruch 1, mit einem Netzwerk, das mittels eines Schalters (2) mit der durch das Netz gebildeten Spannungsquelle verbindbar ist, um ein für zu sendende Daten repräsentatives Stromsignal als Laststrom des Netzwerkes zu erzeugen, dadurch gekennzeichnet, daß eine einen Rechner (3) umfassende, ein Steuersignal (C) für den Schalter (2) liefernde Steuerung (3; 3, 4, 5) vorgesehen ist, um durch eine entsprechende Ansteuerung des Schalters (2) zum Senden des Stromsignals das Netzwerk mehrmals pro Periode (1/F) der Netzspannung (U) kurzzeitig mit der Netzspannungsquelle zu verbinden und dadurch eine Reihe von Stromimpulsen (I) zu erzeugen, wobei mittels der Steuerung (3; 3, 4, 5) die Zeitpunkte der Erzeugung und/oder die Dauer dieser Stromimpulse (I) derart bestimmbar sind, daß das resultierende, durch die Stromimpulse (I) gebildete ausgesandte Stromsignal wenigstens angenähert einem die zu sendenden Daten repräsentierenden, über eine Eingabe der Steuerung (3; 3, 4, 5) vorgebbaren gewünschten theoretischen Signal (R) entspricht und der Steuerung (3; 3, 4, 5) bzw. dem Rechner (3) außer den Kenngrößen des gewünschten theoretischen Signals (R) auch die Kenngrößen der Netzspannung (U) eingebbar sind.

13. Sender nach Anspruch 12, dadurch gekennzeichnet, daß dem Rechner (3) die Kenngrößen in Form von Amplituden- und Phasenwerten ($P_o$, $S_o$, $Q_o$ bzw. $a$) eingebbar sind.

14. Sender nach Anspruch 13, dadurch gekennzeichnet, daß das gewünschte theoretische Signal (R) vone einem trägerfrequenten Signal (S) ableitbar ist, welchem ein Signalanteil (P) mit der Frequenz (F) der Netzspannung (U) überlagert ist.

15. Sender nach Anspruch 14, dadurch gekennzeichnet, daß die Steuerung (3, 4, 5) einen dem Rechner (3) nachgeschalteten Speicher (4) umfaßt, dessen Adressen durch die vorausberechneten möglichen Phasenwerte der Netzspannung (U) und des trägerfrequenten signals (S) gebildet sind.

16. Sender nach Anspruch 15, dadurch gekennzeichnet, daß der Rechner (3) Binärzähler zur Berechnung der aktuellen Phasenwert der Netzspannung (U) bzw. des trägerfrequenten Signals (S) aufweist.

17. Sender nach Anspruch 16, dadurch gekennzeichnet, daß die Steuerung (3, 4, 5) ein zwischen Speicher (4) und Schalter (2) angeordnetes Interface (5) zur Übernahme der vom Speicher (4) für die jeweilige Adresse abgegebenen Information bezüglich der zu erzeugenden Stromimpulse (I) umfaßt, welches vorzugsweise durch ein Schieberegister gebildet ist.

18. Sender nach Anspruch 17, dadurch gekennzeichnet, daß das Interface (5) einen Bestandteil des Rechners (3) bildet.

19. Sender nach einem der Ansprüche 12 bis 18, dadurch gekennzeichnet, daß das Netzwerk, als dessen Laststrom das Stromsignal erzeugt wird, einen Widerstand (1) umfaßt.

20. Sender nach Anspruch 12, dadurch gekennzeichnet, daß dem Rechner (3) die Kenngrößen in Form von Amplitudenwerten ($U_o$, $R_o$) der Netzspannung (U) und des gewünschten theoretischen Signals (R) eingebbar sind.

21. Sender nach Anspruch 20, dadurch gekennzeichnet, daß die dem Rechner (3) eingebbaren Kenngrößen zusätzlich den Amplitudenwert ($P_o$) eines Gleichstromanteils des gewünschten theoretischen Signals (R) enthalten.

22. Sender nach Anspruch 20 oder 21, dadurch gekennzeichnet, daß dem Rechner (3) ein Speicher (4) nachgeschaltet ist, dessen Adressen durch die für eine Periode (1/f) des gewünschten theoretischen Signals (R) als Funktion von dessen Phase vorausberechneten Zeitpunkte der Aussendung der Stromimpulse (I) gebildet sind.

23. Sender nach Anspruch 22, dadurch gekennzeichnet, daß durch den Rechner (3) der aktuelle Phasenwert des gewünschten theoretischen Signals (R) ermittelbar und die durch diesen Wert gebildete Adresse bestimmbar ist.

**Revendications**

1. Procédé pour envoyer des données sur la ligne d'un réseau de distribution de courant alternatif, dans lequel un signal de courant représentatif des données à envoyer est produit et est introduit dans le réseau, ce signal de courant étant produit comme courant de charge dans un réseau qui peut être connecté par un interrupteur (2) à la source de tension formée par le réseau, caractérisé en ce que le réseau est connecté plusieurs fois par période (1/F) de la tension de réseau U pendant une courte durée à la source de tension de réseau pour l'envoi du signal de courant et cela engendre un train d'impulsions de courant I, et en ce que les instants de génération et/ou la durée de ces impulsions de courant I sont choisis au moyen d'une commande de calculateur de manière que le signal de courant émis résultant, formé par les impulsions de courant I, corresponde au moins approximativement à un signal théorique (R) désiré représentatif des données à envoyer.

2. Procédé suivant la revendication 1, caractérisé en ce que des impulsions de courant I de durée constante sont produites.

3. Procédé suivant la revendication 2, caractérisé en ce que la durée ($t_1$) des impulsions de courant I est choisie de manière qu'une multiplicité d'impulsions de courant, de préférence plus de 50 impulsions, puisse être produite par période (1/F) de la tension de réseau U.

4. Procédé suivant la revendication 3, caractérisé en ce que le signal théorique (R) désiré représentatif des données à envoyer dérive d'un signal (S) de fréquence porteuse dont on choisit la période (1/f) avec une valeur plus petite que la période (1/F) de la tension de réseau (U).

5. Procédé suivant la revendication 4, caractérisé en ce qu'on choisit pour le signal de fréquence porteuse (S) une fréquence (f) d'environ 100 à 2500 Hz, pour une tension de réseau (U) avec une fréquence (F) de 50 Hz.

6. Procédé suivant la revendication 4 ou 5, caractérisé en ce qu'une composante de signal (P) ayant la fréquence (F) de la tension de réseau est superposée au signal (S) de fréquence porteuse.

7. Procédé suivant la revendication 1, caractérisé en ce que pour l'établissement d'un signal (C) de la commande de calculateur manoeuvrant l'interrupteur (2), on part de l'hypothèse selon laquelle une source de tension continue existe à la place de la source effective de tension de réseau et on choisit ce signal de manoeuvre de façon telle que le signal de courant formé par la juxtaposition des impulsions de courant (I) pour la fréquence (f) du signal théorique (R) désiré, représentatif des données à envoyer, présente une composante spectrale aussi haute que possible.

8. Procédé suivant la revendication 7, caractérisé en ce que pour la tension continue admise en théorie, on part d'une valeur de tension qui est égale à la valeur d'amplitude ($U_o$) de la tension de réseau (U) effective, formant une tension alternative.

9. Procédé suivant la revendication 8, caractérisé en ce que plusieurs impulsions de courant (I), de préférence environ 64 de ces impulsions, sont produites par période (1/f) du signal théorique (R) désiré.

10. Procédé suivant la revendication 8, caractérisé en ce que le signal théorique (R) désiré présente une composante additionnelle de courant continu.

11. Procédé suivant l'une des revendications 8 à 10, caractérisé en ce que, après l'établissement du signal de manoeuvre (C) sur la base de l'hypothèse d'existence d'une source de tension fournissant une tension continue de réseau, on utilise en service la source effective de tension de réseau fournissant une tension alternative et le signal de courant formé par les impulsions de courant (I) subit ainsi une modulation d'amplitude, ce qui produit, au lieu de la composante de signal pour la fréquence (F) du signal théorique (R) désiré, deux composantes de fréquences f + F et f − F, où (F) représente la fréquence de la tension de réseau (U).

12. Emetteur pour la mise en oeuvre du procédé suivant la revendication 1, avec une réseau qui peut être connecté au moyen d'un interrupteur (2) à la source de tension formée par le réseau, afin d'engendrer comme courant de charge du réseau un signal de courant représentatif des données à envoyer, caractérisé en ce qu'il est prévu une commande (3; 3, 4, 5) comprenant un calculateur (3), fournissant un signal de manoeuvre (C) pour l'interrupteur (2), afin de connecter le réseau, par une manoeuvre correspondante de l'interrupteur (2) pour l'émission du signal de commande, plusieurs fois par période (1/F) de la tension de réseau (U) pendant une courte durée à la source de tension de réseau et de produire ainsi un train d'impulsions de courant (I), les instants de production et/ou la durée de ces impulsions de courant (I) pouvant être déterminés au moyen de la commande (3; 3, 4, 5) de manière que le signal de courant émis résultant, formé par les impulsions de courant (I), corresponde au moins approximativement à un signal théorique (R) désiré représentatif des données à envoyer, pré- déterminables par une entrée de la commande (3; 3, 4, 5) et que, en plus des grandeurs caractérisantes du signal théorique (R) désiré, les grandeurs caractérisantes de la tension de réseau (U) puissent aussi être introduites dans la commande (3; 3, 4, 5) ou le calculateur (3).

13. Emetteur suivant la revendication 12, caractérisé en ce que les grandeurs caractérisantes peuvent être introduites dans la calculateur (3) sous forme de valeurs d'amplitude et de phase ($P_o$, $S_o$, $Q_o$ et respectivement $\alpha$).

14. Emetteur suivant la revendication 13, caractérisé en ce que le signal théorique (R) désiré peut être dérivé d'un signal (S) de fréquence porteuse, auquel une composante de signal (P) avec la fréquence (F) de la tension de réseau (U) est superposée.

15. Emetteur suivant la revendication 14, caractérisé en ce que la commande (3, 4, 5) comprend une mémoire (4) montée à la suite du calculateur (3), dont les adresses sont formées par les valeurs de phase possibles calculées à l'avance de la tension de réseau (U) et du signal (S) de fréquence porteuse.

16. Emetteur suivant la revendication 15, caractérisé en ce que le calculateur (3) présente un compteur binaire pour la calcul de valeurs de phases actuelles de la tension de réseau (U) et du signal (S) de fréquence porteuse.

17. Emetteur suivant la revendication 16, caractérisé en ce que la commande (3, 4, 5) comprend une interface (5) disposée entre la mémoire (4) et l'interrupteur (2) pour le transfert de l'information fournie par la mémoire (4) pour l'adresse concernée relativement aux impulsions de courant (I) devant être engendrées, qui est formée de préférence par un registre.

18. Emetteur suivant la revendication 17, caractérisé en ce que l'interface (5) forme un constituant du calculateur (3).

19. Emetteur suivant l'une des revendications 12 à 18, caractérisé en ce que le réseau, dont le signal de courant est produit comme courant de charge, comprend une résistance (1).

20. Emetteur suivant la revendication 12, caractérisé en ce que les grandeurs caractérisantes peuvent être introduites dans le calculateur (3) sous forme de valeurs d'amplitude ($U_o$, $R_o$) de la tension de réseau (U) et du signal théorique (R) désiré.

21. Emetteur suivant la revendication 20, caractérisé en ce que les grandeurs caractérisantes pouvant être introduites dans la calculateur (3) contiennent en outre la valeur d'amplitude ($P_o$) d'une composante de courant continu du signal théorique (R) désiré.

22. Emetteur suivant la revendication 20 ou 21, caractérisé en ce qu'une mémoire (4), dont les adresses sont formées par les instants d'émission des impulsions de courant (I) préalablement calculés pour une période (1/f) du signal théorique (R) désiré comme fonction de la phase de ce signal, est intercalée à la suite du calculateur (3).

23. Emetteur suivant la revendication 22, caractérisé en ce que le valeur actuelle de phase du signal théorique (R) désiré peut être établie et l'adresse formée par cette valeur peut être déterminée par le calculateur (3).

**Claims**

1. A method of sending data via the conductor of an AC current distribution network in which a current signal representative of the data to be transmitted is generated and is fed into the network, with this current signal being generated as a load current of a circuit which can be connected via a switch (2) with the voltage source formed by the network, characterised in that for the transmission of the current signal the circuit is connected with the supply voltage source for a short time several times per period (1/F) of the supply voltage U and a series of current pulses I is thereby generated; and in that the time points of the generation and/or the duration of these current pulses I are so selected by means of a computer control that the resulting transmitted current signal formed by the current pulses I at least approximately corresponds to a desired theoretical signal (R) representing the data to be transmitted.

2. Method in accordance with claim 1, characterised in that current pulses I of constant duration are generated.

3. Method in accordance with claim 2, characterised in that the duration ($t_1$) of the current pulses I are so selected that a plurality of current pulses, preferably more than 50, can be generated per period (1/F) of the supply voltage U.

4. Method in accordance with claim 3, characterised in that the desired theoretical signal (R) representing the data to be transmitted is derived from a carrier frequency signal (S), the period (1/f) of which one selects to be smaller than the period (1/F) of the supply voltage (U).

5. Method in accordance with claim 4, characterised in that, with network voltage (U) with a frequency (F) of 50 Hz for the carrier frequency signal (S), a frequency (f) of approximately 100 to 2500 Hz is selected.

6. Method in accordance with claim 4 or claim 5, characterised in that a signal component (P) with the frequency (F) of the network voltage is superimposed on the carrier frequency signal (S).

7. Method in accordance with claim 1, characterised in that, in specifying a control signal (C) of the computer control which controls the switch (2) one makes the theoretical assumption that a DC voltage source is present in place of the actual supply voltage source, with this control signal being so selected that the current signal formed by the series of current pulses (I) a spectral component which is as high as possible at the frequency (f) of the desired theoretical signal (R) representing the data to be transmitted.

8. Method in accordance with claim 7, characterised in that for the theoretically assumed DC voltage a voltage value is assumed which is the same as the amplitude value ($U_o$) of the actual supply voltage (U) forming an AC voltage.

9. Method in accordance with claim 8, characterised in that a plurality of current pulses (I), preferably approximately 64 current pulses (I), are generated per period (1/f) of the desired theoretical signal.

10. Method in accordance with claim 8, characterised in that the desired theoretical signal (R) additionally has a DC component.

11. Method in accordance with one of the claims 8 to 10, characterised in that after fixing the control signal (C) as a result of the theoretical assumption of a voltage source delivering a DC network voltage the actual network voltage source is used which delivers an AC voltage in operation and thus the current signal formed by the current pulses (I) is amplitude modulated, with two components having the frequencies f + F and f − F, arising where (F) is the frequency of the network voltage (U), instead of the signal component at the frequency (f) of the desired theoretical signal (R).

12. Transmitter for carrying out the method of claim 1, comprising a circuit which is connectable by means of a switch (2) with the voltage source formed by the network in order to generate a current signal representative to the data to be transmitted as the load current of the circuit, characterised in that a control (3; 3, 4, 5) including a computer (3) is provided which delivers a control signal (C) for the switch (2) in order to briefly connect the circuit with the supply voltage source a plurality of times per period (1/F) of the network voltage (U) for the transmission of the current signal by an appropriate control of the switch (2), and to thereby generate a series of current pulses (I), with the times of generation and/or the duration of these current pulses (I) being determinable by means of the control (3; 3, 4, 5) in such a way that the resulting transmitted current signal formed by the current pulses (I) at least approximates to a desired theoretical signal (R) representative of the data to be transmitted, which can be preset via an input to the control (3; 3, 4, 5), with the characteristic values of the network voltage (U) being capable of being fed to the control (3; 3, 4, 5) or to the computer (3) in addition to the characteristic values of the desired theoretical signal (R).

13. Transmitter in accordance with claim 12, characterised in that the characteristic values are fed to the computer (3) in the form of amplitude and phase values ($P_o$, $S_o$, $Q_o$ and α respectively).

14. Transmitter in accordance with claim 13, characterised in that the desired theoretical signal (R) can be derived from a carrier frequency signal (S) on which there is superimposed a signal component (P) with the frequency (F) of the supply voltage (U).

15. Transmitter in accordance with claim 14, characterised in that the control (3, 4, 5) includes a memory (4) connected after the computer (3) with the addresses of the memory being formed by the previously calculated possible phase values of the network voltage (U) and of the carrier frequency signal (S).

16. Transmitter in accordance with claim 15, characterised in that the computer (3) has binary counters for computing the actual phase values of the network voltage (U) and/or of the carrier frequency signal (S).

17. Transmitter in accordance with claim 16, characterised in that the control (3, 4, 5) has an interface (5) arranged between the memory (4) and the switch (2) for taking over the information transmitted by the memory (4) for the relevant address with respect to the current pulses (I) to be generated, with the interface preferably being formed by a shift register.

18. Transmitter in accordance with claim 17, characterised in that the interface (5) forms a component of the computer (3).

19. Transmitter in accordance with one of the claims 12 to 18, characterised in that the circuit includes a resistor (1) with the current signal being generated as the load current of the resistor.

20. Transmitter in accordance with claim 12, characterised in that the characteristic values in the form of the amplitude values ($U_o$, $R_o$) of the supply voltage (U) and of the desired theoretical signal (R) can be fed to the computer (3).

21. Transmitter in accordance with claim 20, characterised in that the characteristic values which can be fed into the computer (3) additionally contain the amplitude value ($P_o$) of the DC current component of the desired theoretical signal (R).

22. Transmitter in accordance with claim 20 or claim 21, characterised in that a memory (4) is connected after the computer (3), with the addresses of the memory being formed by the time points for the transmission of the current pulses (I) which are previously computed for one period (1/f) of the desired theoretical signal (R) as a function of its phase.

23. Transmitter in accordance with claim 22, characterised in that the actual phase value of the desired theoretical signal (R) can be found by the computer (3) and the address formed by this value can be determined.

EP 0 175 863 B1

FIG. 1

FIG. 3

FIG. 4

1

FIG. 2

EP 0 175 863 B1

FIG.5a

FIG.5b

FIG. 6

FIG. 7